# EUROPÄISCHE PATENTANMELDUNG

(11) **EP 1 703 358 A2**
(43) Veröffentlichungstag der Anmeldung: **20.09.2006**
(21) Anmeldenummer: 06005677.7
(22) Anmeldetag: 20.03.2006
(51) Int. Cl.: G05G 1/14

(54) **Befestigungsvorrichtung für eine fahrlehrer- und fahrschülerseitige Doppelpedalvorrichtung für einen Fahrschulwagen**

(30) Priorität: 18.03.2005 DE 202005004432 U
(71) Anmelder: Stoewer, Renate, 80802 München (DE)
(72) Erfinder: Stoewer, Renate, 80802 München (DE)
(74) Vertreter: von Puttkamer, Nikolaus

(57) **Zusammenfassung**

Die Erfindung betrifft eine Befestigungsvorrichtung zur Befestigung einer fahrlehrer- oder fahrschülerseitig angeordneten Doppelpedalvorrichtung (6; 30) im fahrlehrer-oder fahrschülerseitigen Fußraum eines Fahrschulwagens, wobei die Befestigungsvorrichtung ein Trägerplattenteil (5), an dem die Doppelpedalvorrichtung (6) befestigt ist bzw. Komponenten (30) derselben befestigt sind, wenigstens ein Zwischenplattenteil (3) und ein Basisplattenteil (1) umfasst. Im Montagezustand liegt das Basisplattenteil (1) auf dem Bodenbereich des fahrlehrer- bzw. fahrschülerseitigen Fußraumes an. Es ist eine Niederhaltevorrichtung (2) vorgesehen, die ein Montageplattenteil (13) und ein dazu abgewinkeltes Anlageplattenteil (20) aufweist. Das Montageplattenteil (13) weist wenigstens zwei in Querrichtung voneinander beabstandete Öffnungen (14) auf, durch die Befestigungselemente zur Befestigung des dem fahrlehrer- bzw. fahrschülerseitigen Fahrzeugsitz zugewandten Endbereiches des Montageplattenteiles (13) an einem den Fahrzeugsitz haltenden, in Querrichtung verlaufenden Rahmenteil (16) hindurchführbar sind, wobei das Anlageplattenteil (20) an seiner dem Fahrzeugsitz zugewandten Seite im Montagezustand das Bodenplattenteil (1) fest gegen den Fahrzeugboden (B) drückt.

## Beschreibung

Die vorliegende Erfindung betrifft eine Befestigungsvorrichtung für eine fahrlehrer- und fahrschülerseitige Doppelpedalvorrichtung für einen Fahrschulwagen.

Bei herkömmlichen Doppelpedalvorrichtungen sind in einem Fahrschulwagen die beifahrerseitigen (Seite des Fahrschullehrers) Pedale (Gaspedal, Bremspedal und gegebenenfalls Kupplungspedal) z. B. über konzentrisch angeordnete Rohrteile mit den entsprechenden fahrerseitigen (Seite des Fahrschülers) Pedalen verbunden und gleichzeitig betätigbar. Ein Problem besteht dabei darin, dass der Einbau der bekannten Doppelpedalvorrichtungen in einen Fahrschulwagen äußerst zeitaufwändig und kompliziert ist. Aus der EP 0 583 759 B1 ist eine Doppelpedalvorrichtung bekannt, die zwischen den fahrlehrerseitigen und fahrschülerseitigen Pedalen Zugglieder aus hochreißfestem Textiltauen verwendet, die jeweils über Rollen geführt sind, wobei diese Zugglieder an die jeweils um einen Drehpunkt verschwenkbaren Pedale gekoppelt sind.

Aus der DE 198 15 876 A1 ist eine Befestigungsvorrichtung zur Montage der fahrlehrerseitigen Doppelpedalvorrichtung bekannt, die die Form von entsprechend der Struktur bzw. Gestalt des fahrlehrerseitigen Fußraumes winkelig zueinander verlaufenden Plattenteilen aufweist, wobei das die fahrlehrerseitige Doppelpedalvorrichtung tragende Trägerplattenteil im Montagezustand an der vorderen, oberen Wand des Fußraumes anliegt. Ein Bodenplattenteil, das über zwei Zwischenplattenteile mit dem Trägerplattenteil verbunden ist, liegt im Montagezustand am Boden des fahrlehrerseitigen Fußraumes an und ist an der den Zwischenplattenteilen abgewandten Seite mit einem schmalen streifenförmig ausgebildeten Verlängerungsteil versehen, an dessem freien Ende ein nach oben ragendes Winkelteil angeordnet ist, das eine Bohrung mit einem Innengewinde besitzt, in dem eine Stellschraube verschraubbar ist, die sich an einem am Boden befestigten Anschlagteil abstützt. Beim Verdrehen der Stellschraube wird die gesamte Befestigungsvorrichtung so weit nach vorne in den fahrlehrerseitigen Fußraum hineingeschoben, bis die Zwischenplattenteile und das Trägerplattenteil an den entsprechenden vorderen Bereichen des fahrlehrerseitigen Fußraumes fest anliegen.

Ein Problem einer derartigen Befestigungsvorrichtung besteht darin, dass ihre Befestigung im fahrlehrerseitigen Fußraum problematisch ist.

Die Aufgabe der vorliegenden Erfindung besteht darin, eine Befestigungsvorrichtung zu schaffen, mit deren Hilfe eine schnelle, einfache, kostengünstige und dabei exakte Befestigung der fahrlehrer- und fahrschülerseitigen Doppelpedalvorrichtung im fahrlehrer- bzw. fahrschülerseitigen Fußraum eines Fahrschulwagens möglich ist. Dabei soll die Befestigungsvorrichtung auch schnell und einfach demontierbar sein.

Diese Aufgabe wird durch eine Befestigungsvorrichtung mit den Merkmalen des Schutzanspruches 1 gelöst.

Der wesentliche Vorteil der vorliegenden Erfindung besteht darin, dass eine besonders exakte und relativ einfache und schnelle Montage und Demontage der fahrlehrer- und fahrschülerseitigen Doppelpedalvorrichtung bzw. Komponenten derselben im fahrlehrer- bzw. fahrschülerseitigen Fußraum eines Fahrschulwagens dadurch möglich ist, dass das auf dem Boden des Fußraumes aufliegende Bodenplattenteil der Befestigungsvorrichtung an seiner dem Beifahrer- bzw. Fahrersitz zugewandten Seite mit der Hilfe eines Niederhalters fest gegen den Boden des Fußraumes drückbar ist, wobei die Befestigung und Bewegung des Bodenplattenteiles in die Montageposition durch wenigstens zwei in Querrichtung voneinander beabstandete Stellschrauben erfolgt. Vorteilhafterweise sind keine den Wert oder das Aussehen des Fahrschulwagens mindernde Veränderungen bzw. Bohrungen erforderlich, so dass ein Fahrschulwagen nach Entfernen der Befestigungsvorrichtung ohne weiteres als normales Fahrzeug verkauft bzw. verwendet werden kann.

Im folgenden werden die Erfindung und deren Ausgestaltung im Zusammenhang mit den Figuren näher erläutert. Es zeigen:
Figur 1 die Seitenansicht der erfindungsgemäßen fahrlehrerseitigen Befestigungsvorrichtung;
Figur 2 eine perspektivische Ansicht der erfindungsgemäßen fahrlehrerseitigen Befestigungsvorrichtung; und
Figur 3 die in dem fahrlehrerseitigem Fußraum eines Fahrschulwagens befestige Befestigungsvorrichtung; und
Figur 4 eine perspektivische Ansicht der erfindungsgemäßen fahrschülerseitigen Befestigungsvorrichtung.

Zu der Erfindung führten die folgenden Überlegungen.

Um eine besonders effektive und exakte Befestigung der an einem Trägerplattenteil befestigten fahrerlehrerseitigen Doppelpedalvorrichtung im Fußraum eines Fahrschulwagens sicherzustellen, wobei das Trägerplattenteil an der Oberseite des vorderen Bereiches des vorderen Fußraumes anliegt und über weitere an die Form des Fußraumes angepasste Zwischenplattenteile mit einem Bodenplattenteil verbunden ist, wird das Bodenplattenteil an seiner dem Beifahrersitz zugewandten Seite durch einen Niederhalter fest gegen den Boden des Fußraumes gepresst und wird außerdem mit der Hilfe von wenigstens zwei in Querrichtung voneinander beabstandeten Stellschrauben das Bodenplattenteil in Bezug auf den Niederhalter so bewegt und gespannt, dass die Befestigungsvorrichtung fest und exakt in Richtung auf die Vorderseite des Fußraumes bewegt wird. Dann liegt das Trägerplattenteil fest an dem vorderen, oberen Bereich des Fußraumes an. Gleichzeitig wird dafür Sorge getragen, dass der Niederhalter in einer einfachen und stabilen und lagerichtigen Weise an dem vorderen Querrahmenteil des Beifahrersitzes befestigt werden kann, wobei hierzu lediglich die zur Befestigung des Fahrzeugsitzes an dem Querrahmenteil ohnehin vorgesehenen Schrauben verwendet werden können. Im Montagezustand wird ein Montageplattenteil des Niederhalters zwischen dem Querrahmenteil und entsprechenden Halteflanschen des Fahrzeugsitzes durch Anziehen der genannten Schrauben montiert.

Die fahrschülerseitige Doppelpedaleinrichtung wird entsprechend mit einer Befestigungsvorrichtung montiert, wobei jedoch das Trägerplattenteil derselben Halteaugen bzw. Öffnungen aufweist, durch die zum Verschrauben am Fahrzeug ohnehin bereits vorhandene Steckbolzen oder dergleichen geführt werden.

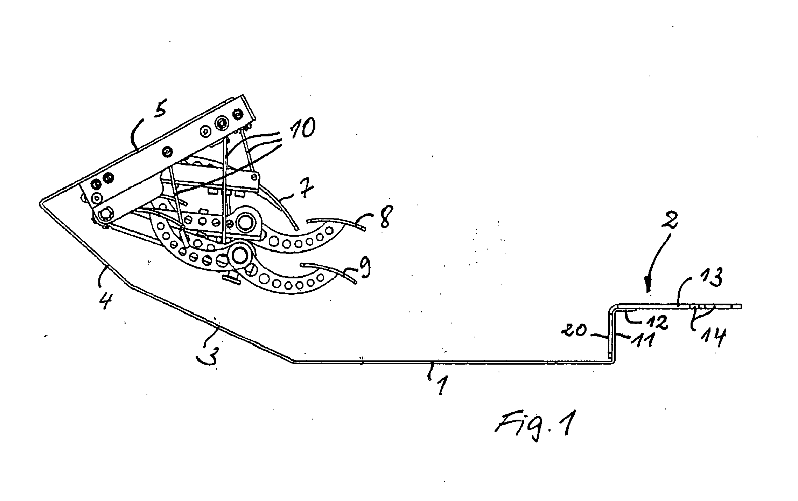

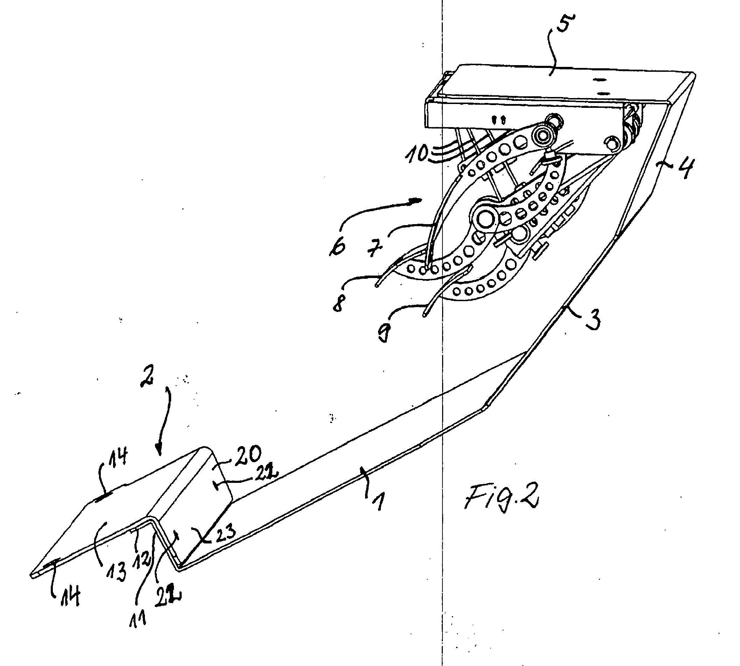

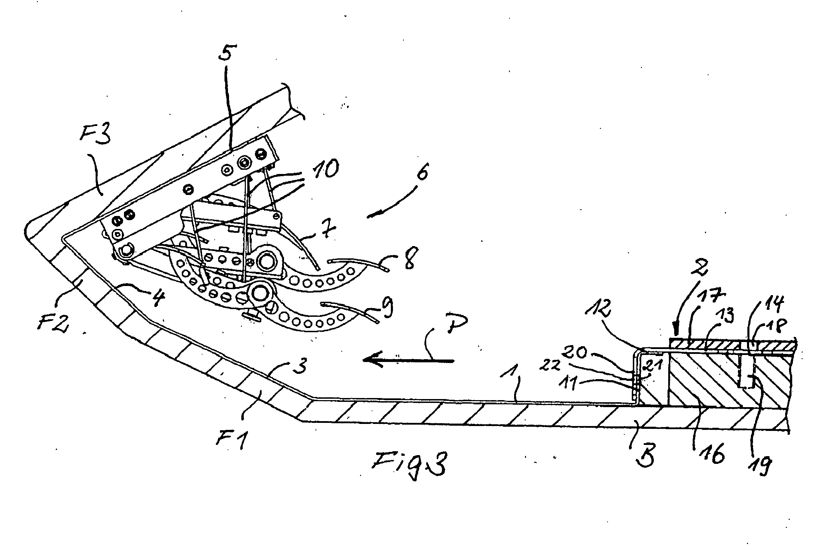

Gemäß den Figuren 1 und 2 besteht die vorliegende Befestigungsvorrichtung im wesentlichen aus einem Bodenplattenteil 1, einem Niederhalter 2, wenigstens einem, vorzugsweise jedoch zwei Zwischenplattenteilen 3 und 4 sowie einem Trägerplattenteil 5. An dem Trägerplattenteil 5 ist in der ersichtlichen Weise die fahrlehrerseitige Doppelpedalvorrichtung 6, die in an sich bekannter Weise ein Gaspedal 7, ein Bremspedal 8 und gegebenenfalls ein Kupplungspedal 9 umfasst, an der dem Fußraum zugewandten Seite befestigt. Die Pedale 7, 8 und 9 sind in ebenfalls an sich bekannter Weise über reißfeste Textiltaue 10 oder über andere bekannte Mittel mit den entsprechenden fahrschülerseitigen Pedalen (nicht dargestellt) verbunden. Das Bodenplattenteil 1 ist vorzugsweise über die beiden Zwischenplattenteilen 3 und 4 mit dem Trägerplattenteil 5 verbunden, wobei die Zwischenplattenteile 3 und 4 sowie das Trägerplattenteil 5 an die Gestalt bzw. Form des vorderen Bereiches des fahrlehrerseitigen Fußraumes angepasst sind. Dies bedeutet, dass dann, wenn das Bodenplattenteil 1 gemäß Figur 3 am Boden B des fahrlehrerseitigen Fußraumes anliegt, das Zwischenplattenteil 3 aus der Ebene des Bodenplattenteiles 1 so heraus verläuft, beispielsweise herausgebogen ist, dass es im Montagezustand der Befestigungsvorrichtung fest an einem ersten, vom Boden B nach oben aufsteigenden Bereich F1 des fahrlehrerseitigen Fußraumes anliegt. Entsprechend ist das zweite Zwischenplatteteil 4 gegenüber der Ebene des ersten Zwischenplattenteiles 3 so abgewinkelt, vorzugsweise abgebogen, dass es im Montagezustand fest an einem gegenüber dem ersten Bereich F1 des fahrlehrerseitigen Fußraumes nach oben ansteigenden zweiten Bereich F2 des Fußraumes anliegt. Das Trägerplattenteil 5 ist gegenüber dem zweiten Zwischenplattenteil 4 so abgewinkelt bzw. so abgebogen, dass es mit seiner den Pedalen 7, 8 und 9 abgewandten Seite fest an dem oberen Bereich F3 des fahrlehrerseitigen Fußraumes anliegt, wobei der obere Bereich F3 zur vorderen Seite des Fahrzeuges schräg von oben nach unten und die Bereiche F1 und F2 schräg von unten nach oben verlaufen.

An ihrer dem Fahrzeugsitz zugewandten Seite weist das Bodenplattenteil 1 einen nach oben, vorzugsweise um einen Winkel von 90°, abgewinkelten plattenförmigen Anlagebereich 11 auf, der an seinem oberen Ende einen weiteren abgewinkelten plattenförmigen Auflagebereich 12 besitzt, der vorzugsweise gegenüber dem Anlagebereich 11 um 90° abgewinkelt ist, derart, dass der Auflagebereich 12 an der der Doppelpedalvorrichtung 6 abgewandten Seite des Anlagebereiches 11 angeordnet ist. Die Bereiche 11 und 12 erstrecken sich vorzugsweise über die gesamte Breite des Bodenplattenteiles 1.

Der Niederhalter 2 besteht aus einem plattenförmigen Montageplattenteil 13, das an seiner dem Anlagebereich 11 abgewandten Seite vorzugsweise zwei in Querrichtung voneinander beabstandete Löcher 14 aufweist, deren Abstand genau dem Abstand entspricht, um den die vorderen Befestigungsschrauben (nicht näher dargestellt) zur Befestigung von Halteflanschen 17 des Fahrlehrersitzes an einem in Querrichtung verlaufenden Querrahmenteil 16 voneinander beabstandet sind. Auf diese Weise kann gemäß Figur 3 nach dem Lösen der Befestigungsschrauben, das Montageplattenteil 13 derart zwischen den Halteflanschen 17 und dem in Querrichtung verlaufenden Querrahmenteil 16 angeordnet werden, dass die Löcher 14 zu den entsprechenden Öffnungen 18 und 19 der Halteflansche 17 und des Querrahmenteiles 16 ausgerichtet sind, wobei nach dem Festdrehen der Befestigungsschrauben das Montageplattenteil 13 fest am Querrahmenteil 16 befestigt ist und auf diesem aufliegt. Aus der Ebene des Montageplattenteiles 13 ist ein Anlageplattenteil 20 abgewinkelt bzw. herausgebogen, das im Montagezustand parallel zum Anlagebereich 11 verläuft und bis zum Bodenplattenteil 1 reicht. Das Montageplattenteil 13 und das Anlageplattenteil 20 erstrecken sich vorzugsweise über die gesamte Breite des Bodenplattenteiles 1. Vorzugsweise handelt es sich, wie in Figur 3 dargestellt, bei der Öffnung 19 um eine Gewindebohrung zur Aufnahme des Gewindes der entsprechenden Befestigungsschraube.

Im Montagezustand liegt das Montageplattenteil 13 auf dem Auflagebereich 12 auf, sodass das Bodenplattenteil 1 fest gegen den Boden B des fahrlehrerseitigen Fußraumes gepresst wird.

In dem Anlagebereich 11 sind in Querrichtung voneinander beabstandet wenigstens zwei Bohrungen, vorzugsweise Gewindebohrungen 21 (Figur 3) angeordnet, die zu entsprechenden Bohrungen 22 des Anlageplattenteiles 20 ausgerichtet sind, sodass beim Festschrauben von nicht näher dargestellten Stellschrauben, die durch die Bohrungen 22 geführt sind und in die Innengewinde der Bohrungen 21 eingreifen, der Anlagebereich 11 in Richtung auf das Anlageplattenteil 20 gezogen wird, wobei das Basisplattenteil 1 und die daran angeordneten bzw. befestigten Zwischenplattenteile 3, 4 sowie das Trägerplattenteil 5 in der Richtung des Pfeiles P in dem Fußraum, nach vorne bewegt werden, bis der Montagezustand und die in der Figur 3 gezeigte feste Verbindung der Befestigungsvorrichtung mit dem Fußraum erreicht sind.

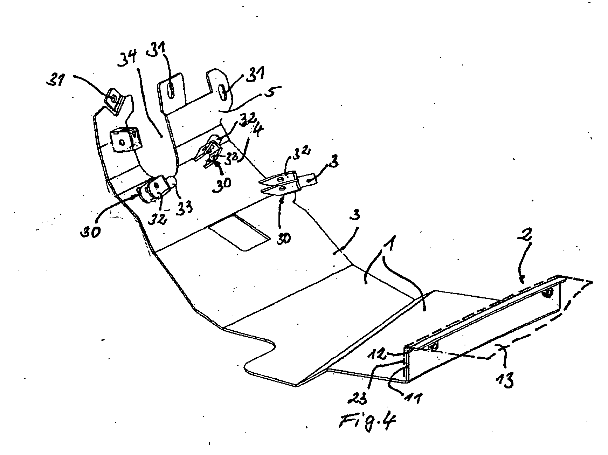

Die Figur 4 zeigt eine Befestigungseinrichtung zur Befestigung der fahrschülerseitigen Komponenten der Doppelpedaleinrichtung. Einzelheiten der Figur 4, die bereits im Zusammenhang mit den anderen Figuren erläutert wurden, sind entsprechend bezeichnet.

Der wesentliche Unterschied zur fahrlehrerseitigeh Befestigungsvorrichtung besteht darin, dass das Trägerplattenteil 4, an der im Falle der Verwendung von Textiltauen auch die Montageeinheiten 30 mit den Lagerrollenhalterungen 32 und Bowdenzughüllensitzen 33 befestigt sind, Öffnungen 31 aufweist, durch die zur Montage des Trägerplattenteiles 5 am Fahrzeug Steckbolzen oder dergleichen geführt werden, die ohnehin schon am Fahrzeug vorhanden sind. Dabei sind die Öffnungen 31 fanrzeugspezifisch im Trägerplattenteil 5 angeordnet. Auch sind das Trägerplattenteil 5 sowie die Zwischenplattenteile 3 und 4 und das Bodenplattenteil 1, das im gezeigten Beispiel gestuft ausgestaltet ist, an die Fahrzeugkonturen angepasst. Die Aussparung des Trägerplattenteiles 5 dient zum Hindurchführung der Lenksäule des Fahrzeuges.

## Patentansprüche

1. Befestigungsvorrichtung zur Befestigung einer fahrlehrer- oder fahrschülerseitig angeordneten Doppelpedalvorrichtung (6; 30) im fahrlehrer- oder fahrschülerseitigen Fußraum eines Fahrschulwagens, wobei die Befestigungsvorrichtung ein Trägerplattenteil (5), an dem die Doppelpedalvorrichtung (6)befestigt ist bzw. Komponenten (30) derselben befestigt sind, wenigstens ein Zwischenplattenteil (3) und ein Basisplattenteil (1) umfasst, wobei im Montagezustand das Basisplattenteil (1) auf dem Bodenbereich des fahrlehrer- bzw. fahrschülerseitigen Fußraumes anliegt, **dadurch gekennzeichnet, dass** eine Niederhaltevorrichtung (2) vorgesehen ist, die ein Montageplattenteil (13) und ein dazu abgewinkeltes Anlageplattenteil (20) aufweist, dass das Montageplattenteil (13) wenigstens zwei in Querrichtung voneinander beabstandete Öffnungen (14) aufweist, durch die Befestigungselemente zur Befestigung des dem fahrlehrer- bzw. fahrschülerseitigen Fahrzeugsitz zugewandten Endbereiches des Mortageplattenteiles (13) an einem den Fahrzeugsitz haltenden, in Querrichtung verlaufenden Rahmenteil (16) hindurchführbar sind, wobei das Anlageplattenteil (20) an seiner dem Fahrzeugsitz zugewandten Seite im Montagezustand das Bodenplattenteil (1) fest gegen den Fahrzeugboden (B) drückt.

2. Befestigungsvorrichtung nach Anspruch 1, **dadurch gekennzeichnet, dass** das Bodenplattenteil (1) einen vom Fahrzeugboden weg abgewinkelten Anlagebereich (11) aufweist, den das Anlageplattenteil (20) an der dem Fahrzeugsitz abgewandten Seite des Anlagebereiches (11) hintergreift.

3. Befestigungsvorrichtung nach Anspruch 2, **dadurch gekennzeichnet, dass** das Anlageplattenteil (20) unter einem rechten Winkel zur Ebene des Montageplattenteiles (13) verläuft und dass der Anlagebereich (11) unter einem rechten Winkel zur Ebene des Bodenplattenteils (1) verläuft.

4. Befestigungsvorrichtung nach Anspruch 2 oder 3, **dadurch gekennzeichnet, dass** an das dem Bodenplattenteil (1) abgewandte Ende des Anlagebereiches (11) ein Auflageplattenteil (12) angeformt ist, dass sich in Richtung auf das Rahmenteil (16) erstreckt und auf dem im Montagezustand das Montageplattenteil (13) des Niederhalters (2) aufliegt.

5. Befestigungsvorrichtung nach Anspruch 4, **dadurch gekennzeichnet, dass** das Auflageplattenteil (12) unter einem rechten Winkel zum Anlagebereich (11) verläuft.

6. Befestigungsvorrichtung nach einem der Ansprüche 2 bis 5, **dadurch gekennzeichnet, dass** der Anlagebereich (11) und das Anlageplattenteil (20) durch eine Spanneinrichtung derart aufeinander zu bewegbar sind, dass das Bodenplattenteil (1) im Montagezustand in Richtung auf die dem Fahrzeugsitz abgewandte Seite des Fußraumes bewegt ist.

7. Befestigungsvorrichtung nach Anspruch 6, **dadurch gekennzeichnet, dass** die Spanneinrichtung wenigstens zwei in Querrichtung voneinander beabstandete Bohrungen (21) im Anlagebereich (11) oder im Anlageplattenteil (20) und wenigstens zwei in Querrichtung entsprechend voneinander beabstandete Gewindebohrungen (22) im Anlageplattenteil (20) oder im Anlagebereich (11) und Stellschrauben umfasst, die durch die Bohrungen führbar und in den Gewindebohrungen verschraubbar sind.

8. Befestigungsvorrichtung nach einem der Ansprüche 1 bis 7, **dadurch gekennzeichnet, dass** fahrlehrerseitig das Bodenplattenteil (1) mit dem Zwischenplattenteil (3) verbunden ist, derart, dass im Montagezustand das Zwischenplattenteil (3) an einem ersten, vom Boden (B) des Fußraumes aufsteigenden Bereich (F1) des Fußraumes anliegt, dass das Zwischenplattenteil (3) mit einem weiteren Zwischenplattenteil (4) verbunden ist, derart, dass im Montagezustand das weitere Zwischenplattenteil (4) an einem vom ersten Bereich (F1) steiler aufsteigenden weiteren Bereich (F2) des Fußraumes anliegt, und dass das Trägerplattenteil (5) mit dem Ende des weiteren Zwischenplattenteils (4) verbunden ist, so dass es im Montagezustand fest an den entsprechenden vorderen und oberen Bereichen des Fußraumes anliegt.

9. Befestigungsvorrichtung nach einem der Ansprüche 1 bis 7, **dadurch gekennzeichnet, dass** fahrschülerseitig das Bodenplattenteil (1) mit dem Zwischenplattenteil (3) verbunden ist, derart, dass im Montagezustand das Zwischenplattenteil (3) an einem ersten, vom Boden (B) des Fußraumes aufsteigenden Bereich (F1) des Fußraumes anliegt, dass das Zwischenplattenteil (3) mit einem weiteren Zwischenplattenteil (4) verbunden ist, derart, dass im Montagezustand das weitere Zwischenplattenteil (4) an einem vom ersten Bereich (F1) steiler aufsteigenden weiteren Bereich (F2) des Fußraumes anliegt, und dass das Trägerplattenteil (5) fahrzeugspezifisch angeordnete Öffnungen (31) aufweist, durch die Befestigungsmittel des Fahrzeuges zur Befestigung des Trägerplattenteiles (5) am Fahrzeug hindurchführbar sind.

10. Befestigungsvorrichtung nach Anspruch 8 oder 9, **dadurch gekennzeichnet, dass** das Bodenplattenteil (1), das Zwischenplattenteil (3), das weitere Zwischenplattenteil (4) und das Trägerplattenteil (5) und/oder der Anlagebereich (11) und/oder das Auflageplattenteil (12) aus einem plattenförmigen Ausgangsmaterial durch Biegeoperationen hergestellt sind.

11. Befestigungsvorrichtung nach einem der Ansprüche 1 bis 10, **dadurch gekennzeichnet, dass** das Montageplattenteil (13) und das Anlageplattenteil (20) des Niederhalters (2) aus einem plattenförmigen Ausgangsmaterial durch eine Biegeoperation hergestellt sind.

12. Befestigungsvorrichtung nach einem der Ansprüche 1 bis 11, **dadurch gekennzeichnet, dass** sich der Anlagebereich (11) über die gesamte Breite des Bodenplattenteiles (1) erstreckt.

13. Befestigungsvorrichtung nach einem der Ansprüche 1 bis 12, **dadurch gekennzeichnet, dass** sich das Anlageplattenteil (20) über die gesamte Breite des Montageplattenteiles (13) erstreckt.

14. Befestigungsvorrichtung nach einem der Ansprüche 9 bis 13, **dadurch gekennzeichnet, dass** das Trägerplattenteil (5) eine Aussparung (34) zum Hindurchführen der Lenksäule des Fahrzeuges aufweist.
